# EUROPEAN PATENT SPECIFICATION

(11) **EP 4 344 036 B1**
(45) Date of publication and mention of the grant of the patent: **05.08.2026**
(21) Application number: 22196760.7
(22) Date of filing: 21.09.2022
(51) Int. Cl.: H02M 1/00, H02M 1/36, H02M 7/483, H02M 7/487, H02M 1/12

(54) **ACTIVE FILTER PRE-CHARGING FOR A CONVERTER WITH ACTIVE FILTER CELLS**
AKTIVE FILTERVORLADUNG FÜR EINEN UMRICHTER MIT AKTIVEN FILTERZELLEN
PRÉCHARGE DE FILTRE ACTIF POUR UN CONVERTISSEUR AVEC CELLULES DE FILTRE ACTIVES

(43) Date of publication of application: 27.03.2024
(73) Proprietor: ABB SCHWEIZ AG, 5400 Baden (CH)
(72) Inventor: SCHWEIZER, Mario, 5406 Rütihof (CH); KIEFERNDORF, Frederick, 5400 Baden (CH); VETTERLI, Manuel, 4053 Basel (CH)
(74) Representative: Sykora & König Patentanwälte PartG mbB

(56) References cited:
- JP-A- 2003 070 255
- US-A1- 2014 169 040
- US-A1- 2022 149 751
- US-A1- 2022 231 599

## Description

### FIELD OF THE INVENTION

The invention relates to the field of high power converter control. In particular, the invention relates to a method, a computer program, a computer-readable medium and a controller for pre-charging filter cells during a start-up of an electrical converter having filter cells. The invention also relates to the electrical converter.

### BACKGROUND OF THE INVENTION

In particular in medium voltage applications, a cost effective electrical converter topology with high power quality is given with the 3L(A)NPC+AF topology. Here, 3L means 3 level, (A)NPC means (active) neutral point clamped and AF means active filter. The 3L(A)NPC is also referred to as main stage of the converter herein in the following. This topology has been proposed years ago. However, optimized hardware design, reliable control and failure-proof operation is still a challenge.

Due to the superior voltage quality, the electrical converter with active filter cells can be used to drive sensitive loads such as direct-on-line (DOL) machines. Furthermore, if it is used as an active rectifier unit, it enables compliance with stringent grid harmonic limits without the need for high switching frequencies of the main stage.

One of the main advantages of the 3L(A)NPC+AF topology are the small voltage steps that can be generated. The small voltage steps reduce the machine-side dv/dt and overvoltages, as well as the current THD (total harmonic distortion) and involved harmonic losses in the machine.

To fully benefit from these small voltage steps, the active filter cells of the electrical converter need to be charged to their nominal voltage from the very beginning, when the electrical converter starts to operate. This is especially important with sensitive loads, such as DOL machines. If the AF cells are not charged, the electrical converter could create voltage steps with large magnitude, which can damage the insulation of the DOL machine and introduce torque ripple and extensive machine losses.

Therefore, the active filter cells should be pre-charged before the operation of the electrical converter starts. So far, finding an effective way to achieve this has been an unsolved challenge.

Existing pre-charge methods for the AF cells of an electrical converter with the 3L(A)NPC+AF topology can be summarized as follows:
Externally supplied AF cells are one possibility. This method is common e.g. in cascaded H-bridge converters, where every AF cell is supplied over a diode bridge supplied by an isolated transformer winding set. This is, however, a costly solution and not suitable for the 3L(A)NPC + AF topology due to the lack of a multi-winding transformer.

Another possibility is to provide dedicated pre-charge circuits for each AF cell supplied from external auxiliary power. Most often, the gate drive circuits of the AF cells are supplied with isolated auxiliary power supplies. It is possible to design an isolated/non-isolated dedicated pre-charging circuit that is fed from the auxiliary power, for each active filter cell. However, this involves additional costly hardware.

Still another possibility is to start the electrical converter operation with uncharged AF cells and slowly charge them during closed-loop operation. This method has the above-mentioned drawbacks that it works only when an electrical load (such as an electrical motor or machine) is directly connected to the electrical converter which thus supplies the electrical load with large voltage steps until the AF cells are charged. These voltage steps can damage, for example, the motor winding insulation.

US 2014/169 040 A1 shows an electrical converter with three NPC legs and a pre-charging unit for charging DC links of the legs via outputs of the legs.

US 2022/149 751 A1 shows an electrical converter with a NPC main stage connected to floating cells. A method for controlling the electrical converter is described, which reduces common mode noise.

JP 2003 070 255 A shows a converter with a pre-charging unit for charging the DC link of the converter.

US 2022/231 599 A1 describes a method for heating up an electrical converter and in particular its semiconductor elements before startup of the normal switching operation.

### DESCRIPTION OF THE INVENTION

It is an objective of the invention to improve the control of an electrical multi-level converter including filter cells. A further objective of the invention is to avoid any damage to an electrical load connected to an electrical converter with filter cells when it starts operation.

These objectives are achieved by the subject-matter of the independent claims. Further exemplary embodiments are evident from the dependent claims and the following description.

An aspect of the invention relates to a method for pre-charging filter cells during a start-up of an electrical converter. The electrical converter may be a medium or high voltage converter adapted for processing voltages up to 6.6kV or more. It may be configured to drive an electrical motor or machine or any other physical system that acts as an electrical load of the electrical converter.

According to the invention, the electrical converter comprises a main stage adapted for converting a DC voltage into a multi-phase intermediate voltage comprising at least three voltage levels. The main stage may comprise one or more (A)NPC half-bridges, which are connected in parallel to a DC link. The output of the half-bridges may be the intermediate voltage, which may be a multi-phase, in particular three-phase voltage. Dependent on the topology of the main stage, the output voltage may have three, five or more voltage levels. In the case of 3L(A)NPC half-bridges, there may be three output voltage levels.

According to the invention, the electrical converter further comprises a filter cell stage (also briefly denoted as "cell stage" in the following) with a filter cell for each phase of the intermediate voltage, wherein each filter cell is adapted for adding or subtracting a cell voltage of the filter cell to the intermediate voltage. Each filter cell may comprise a cell capacitor providing the cell voltage, which is connected in parallel with two half-bridges providing an input and an output of the filter cell. The filter cell stage may be seen as an active filter (AF) of the electrical converter, so that each filter cell may be seen as an active filter cell (AF cell).

According to the invention, the electrical converter further comprises a pre-charge circuit adapted for pre-charging the filter cells and a DC link of the main stage. To this end, the pre-charge circuit may comprise an auxiliary power source connected between one phase of an output of the electrical converter and a neutral point of said DC link of the main stage. The neutral point may be a connection point between an upper DC link capacitor and a lower DC link capacitor of the DC link of the main stage. For example, the auxiliary power source of the pre-charge circuit may be configured as a transformer winding creating a single-phase AC voltage.

According to the invention, all phases of the output of the electrical converter are connected via the electrical load, such as an electrical motor or electrical machine or any other physical system. Therefore, although the pre-charge circuit is connected to only one phase of the output of the electrical converter, the filter cells in all the other phases may be charged up by the pre-charge circuit as well via the electrical load, e.g. via the machine windings.

According to an embodiment of the invention, the method comprises a pre-charging of the filter cells comprising the steps of: switching the main stage such that all phases of the output of the main stage are directly connected to the neutral point of the DC link of the main stage; switching at least one of the filter cells into a rectifying state, in which a rectified current flows through a cell capacitor of this filter cell; and switching the pre-charge circuit on and charging the cell capacitor of said at least one filter cell by the pre-charge circuit, until a nominal (i. e. predefined) cell voltage is achieved at the cell capacitor of this filter cell. Whether the nominal cell voltage is achieved or not may be determined by comparing it with an output voltage of the filter cells, which can be directly measured in the filter cells.

In particular, said pre-charging of the filter cells may comprise the steps of: switching the main stage such that all phases of the output of the main stage are directly connected to the neutral point of the DC link of the main stage; switching all filter cells into rectifying states, in which a rectified current flows through the cell capacitor of each filter cell; and switching the pre-charge circuit on and charging the cell capacitors of all filter cells by the pre-charge circuit until the nominal cell voltage is achieved. The auxiliary power source of the pre-charge circuit will then charge the cell capacitors of the filter cells in all phases simultaneously because they are all connected in parallel to the pre-charge circuit over the electrical load and the neutral point of the DC link.

With this method, the main stage is out of operation when the pre-charging of the filter cells to the nominal cell voltage is carried out. Thus, any damage to the electrical load by full voltage steps which are possible before the nominal cell voltage is achieved can be avoided or excluded. In particular, the pre-charging of the filter cells may be performed before the main stage starts operation, i. e. during a start-up of the electrical converter.

According to an embodiment of the invention, current generated by the pre-charge circuit is alternating current. As described herein above and below, the AC current generated by the pre-charge circuit may be rectified in the course of pre-charging the filter cells by switching the filter cells into their rectifying states, in which rectified currents flow through the cell capacitors. For example, the auxiliary power source of the pre-charge circuit may be configured as a transformer winding creating a single-phase AC voltage. The pre-charging current may be limited under all circumstances to a few amperes due to a high short-circuit impedance of the auxiliary transformer.

According to an embodiment of the invention, the method further comprises a pre-charging of the DC link of the main stage. The pre-charging of the DC link of the main stage may be carried out before or after the pre-charging of the filter cells and comprise the steps of: switching each filter cell such that its output is directly connected to its input (e.g. to the output of the main stage), thus bypassing the cell capacitor; switching the main stage such that, depending on the sign of voltage applied between the neutral point of the DC link and an output of the main stage in the respective phase, either an upper DC link capacitor or a lower DC link capacitor is charged; switching the pre-charge circuit on and charging said DC link capacitors by an alternating current generated by the pre-charge circuit, until a nominal (i. e. predefined) DC link voltage is achieved. Whether the nominal DC link voltage is achieved or not may be determined by comparing it with the upper and the lower DC link voltages, as obtained, for example, from measurements at the output of the main stage or at the DC link of the main stage.

According to an embodiment of the invention, when the nominal cell voltages of the filter cells are achieved and/or the nominal DC link voltage of the DC link is achieved, the pre-charge circuit is switched off and/or its auxiliary power source is disconnected from the electrical converter.

The pre-charging of the filter cells may, for example, be repeated whenever the cell voltage, for example as measured in at least one of the filter cells, falls below a predetermined cell voltage threshold. The predetermined cell voltage threshold may, for example, be equal to or less than the nominal cell voltage. Also, the pre-charging of the DC link of the main stage may be repeated whenever the DC link voltage, for example as measured at the DC link of the main stage, falls below a predetermined DC link voltage threshold. The predetermined DC link voltage threshold may, for example, be equal to or less than the nominal DC link voltage.

According to an embodiment of the invention, each filter cell comprises two half-bridges connected in parallel with the cell capacitor. Each half-bridge may have at least two semiconductor switches (such as IGBTs), each of which is bypassed by a freewheeling diode, such that the respective filter cell is switched into its rectifying state, in which a rectified current flows through the cell capacitor, by switching off all its semiconductor switches. The respective filter cell may be switched into a directly connecting state, in which its cell capacitor is bypassed, by switching on either only all upper semiconductor switches or only all lower semiconductor switches connected between the input and the output of the filter cell. For example, two upper semiconductor switches and two lower semiconductor switches may be connected between the input and the output of the filter cell, so that the filter cell has four semiconductor switches in total.

According to an embodiment of the invention, each phase of the main stage comprises at least four freewheeling diodes and at least four semiconductor switches (e.g IGBTs), each of which is bypassed by one of said freewheeling diodes, such that by switching off all semiconductor switches of the main stage, either the upper DC link capacitor or the lower DC link capacitor is pre-charged over the freewheeling diodes bypassing the semiconductor switches, depending on the sign of the pre-charging current. Furthermore, by switching on the semiconductor switches that connect the output to the neutral point of the main stage, its output is directly connected to the neutral point of the DC link, thereby bypassing the DC link capacitors. For example, each phase of the main stage may comprise an (A)NPC half-bridge, which is connected in parallel to a DC link and comprises six freewheeling diodes. In an NPC-configuration, four semiconductor switches may be provided. In an ANPC-configuration, six semiconductor switches may be provided.

According to an embodiment of the invention, the electrical converter further comprises, in each phase of its output, a passive output filter connected in series between the respective output of the filter cell stage and an output of the electrical converter. The pre-charge circuit may, for example, be connected to said phase of the output of the electrical converter between an inductance and an RC-group (i.e. a resistance and a capacitance connected in series) of the passive output filter provided in this phase. For example, the passive output filter may be configured as an EMC-filter (electromagnetic compatibility filter).

In this embodiment, a passive output filter starpoint in which the RC-groups of all phases are connected together may be, for example, directly connected to the neutral point of the DC link of the main stage. Alternatively, the starpoint of the passive output filter may be a floating starpoint, i.e. without any further connection.

According to an embodiment of the invention, the steps of the pre-charging of the filter cells are performed by a filter cell pre-charge controller and the steps of the pre-charging of the DC link of the main stage are performed by a DC link pre-charge controller.

Further aspects of the invention relate to a computer program according to claim 12 and to a computer-readable medium, in which such a computer program is stored. Both the pre-charging of the filter cells and the pre-charging of the DC link of the main stage may be executed as software on one or more processors.

It may be that the filter cell pre-charge controller has a processor and that the pre-charging of the filter cells is executed on this processor. The method steps pertaining to the pre-charging of the filter cells may be stored in a memory of the filter cell pre-charge controller.

It also may be that the DC link pre-charge controller has a processor and that the pre-charging of the DC link of the main stage is executed on this processor. The method steps pertaining to the pre-charging of the DC link of the main stage may be stored in a memory of the DC link pre-charge controller.

A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to a controller according to claim 11.

The controller may comprise one or more processors, in which the controller functions are run as software. It also may be that the controller functions are at least partially or completely implemented in hardware, such as a DSP or FPGA.

A further aspect of the invention relates to an electrical converter, which is controlled such as described herein.

According to an embodiment of the invention, the electrical converter comprises a main stage adapted for converting a DC voltage into a multi-phase intermediate voltage comprising at least two voltage levels and a filter cell stage with a filter cell for each phase of the intermediate voltage, wherein each filter cell is adapted for adding or subtracting a cell voltage of the filter cell to the intermediate voltage. According to an embodiment of the invention, the electrical converter further comprises a pre-charge circuit adapted for pre-charging the filter cells and a DC link of the main stage and comprising an auxiliary power source connected between one phase of an output of the electrical converter and a neutral point of said DC link of the main stage. It may further comprise a controller such as described herein. According to an embodiment of the invention, all phases of the output of the electrical converter are connected via an electrical motor or machine or any other physical system that acts as an electrical load of the electrical converter.

In general, it has to be understood that features of the method as described above and in the following may be features of the computer program, the computer-readable medium, the controller and the electrical converter as described above and in the following, and vice versa.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 shows a schematic circuit diagram of an electrical converter according to an embodiment of the invention.
Figs. 2a and 2b show, in schematic circuit diagrams, two exemplary configurations of one phase of a main stage of the electrical converter of Fig. 1.
Fig. 3 shows a schematic block diagram of a controller according to an embodiment of the invention.
Fig. 4a shows diagrams illustrating a pre-charging of a DC link of the main stage to a nominal DC link voltage according to an embodiment of the invention.
Fig. 4b shows diagrams illustrating a pre-charging of a filter cell in each of three phases of an electrical converter to a nominal cell voltage, according to an embodiment of the invention.
Fig. 4c shows diagrams illustrating a motor current in each of three phases during the pre-charging of the filter cells as shown in Fig. 4b.

In principle, identical parts are provided with the same reference symbols in the figures.

### DETAILED DESCRIPTION OF EXEMPLARY EMBODIMENTS

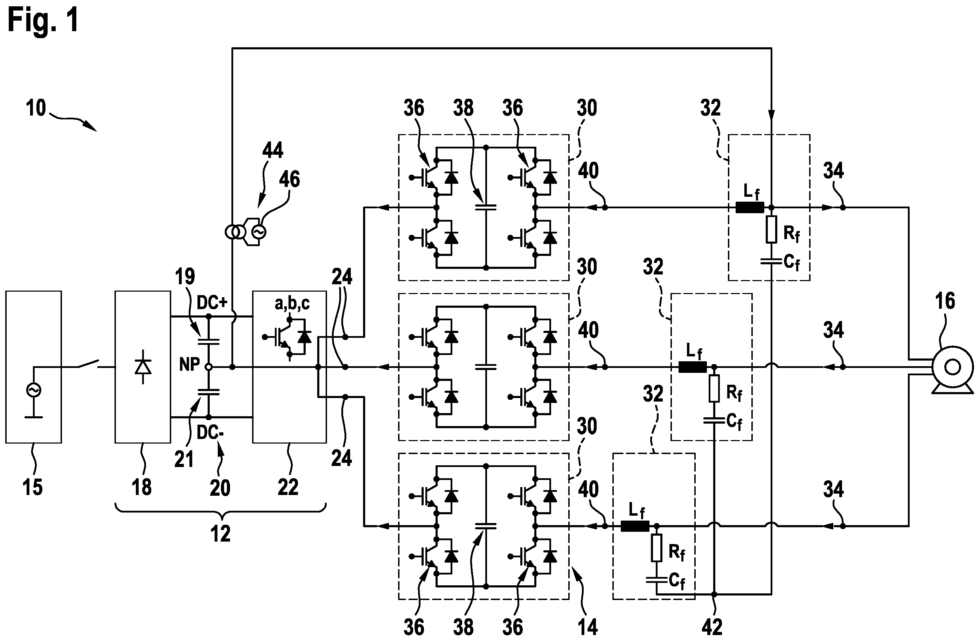

Fig. 1 shows an electrical converter 10 with a main stage 12 and a filter cell stage 14. The electrical converter 10 is adapted for transforming a first AC voltage provided by a power grid 15 into an output voltage to be supplied to an electrical load 16, which may be a motor in this example.

The main stage 12 comprises a rectifier 18, which may be a passive diode rectifier and which is adapted for converting the AC voltage from the power grid 15 into a DC voltage, which is supplied to a (main) DC link 20 of the main stage 12. The DC link 20 comprises an upper DC link capacitor 19 and a lower DC link capacitor 21 with a neutral point NP as a connection point lying there between.

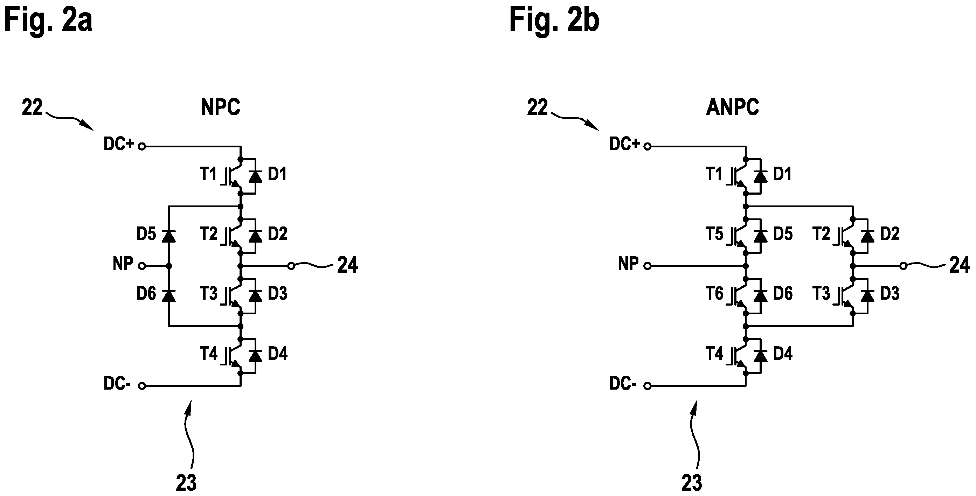

In this example, the main stage 12 comprises three output converters 22 (only symbolically indicated in Fig. 1 and shown in more detail in Fig. 2a or Fig. 2b for one phase a, b, or c). Each output converter 22 is adapted for transforming the DC voltage at the DC link 20 into a phase of an intermediate voltage that is provided at respective phase outputs 24 of the main stage 12. The output converters 22 are connected in parallel to the DC link 20, for example via clamp inductors and/or resistors 28 (not shown) or directly.

As shown in more detail in examples according to Figs. 2a and 2b, each of the output converters 22 may comprise a 3-level neutral point clamped (3LNPC) half-bridge 23, which may be based on IGBTs in this example. However, other topologies and semiconductor types are also possible.

In the example shown in Fig. 2a, each phase of the main stage 12, i.e. each output converter 22 comprises an NPC half-bridge 23 which is connected in parallel to the DC link 20 and comprises six freewheeling diodes D1-D6. In the exemplary NPC-configuration as shown in Fig. 2a, four semiconductor switches T1-T4 (such as IGBTs) may be provided, each of which is bypassed by one of the freewheeling diodes D1-D4, such that by switching off all semiconductor switches T1-T4 of the main stage 12, either the upper DC link capacitor 19 or the lower DC link capacitor 21 of the DC link 20 may be pre-charged over the freewheeling diodes D1-D4 bypassing the semiconductor switches T1-T4, depending on the sign of a charging current or voltage applied between the neutral point NP of the DC link 20 and the respective output 24 of the output converter 22.

Alternatively, as schematically depicted in Fig. 2b, each half-bridge 23 may be an ANPC half-bridge which is connected in parallel to the DC link 20 and comprises six freewheeling diodes D1-D6. In this case, six semiconductor switches T1-T6 (such as IGBTs) may be provided, each of which is bypassed by one of the freewheeling diodes D1-D6, such that by switching off all semiconductor switches T1-T6 of the main stage 12, either the upper DC link capacitor 19 or the lower DC link capacitor 21 of the DC link 20 may be pre-charged over the freewheeling diodes D1-D4 bypassing the semiconductor switches T1-T4, depending on the sign of a charging current or voltage applied between the neutral point NP of the DC link 20 and the respective output 24 of the output converter 22.

Also, for the overall main stage 12, other topologies are possible. In general, the main stage 12 may be adapted to provide a multi-level intermediate voltage at the outputs 24, optionally with more than one phase. A half-bridge 23 as shown in Fig. 2a or Fig. 2b is adapted for generating three different voltage levels for the respective phase (a, b and c) of the intermediate voltage.

For every phase of the main stage 12, the filter cell stage 14 comprises a filter cell 30, which may be seen as an active filter (AF), and optionally a passive output filter 32, which are connected in series between the respective output 24 of the main stage 12 and an output 34 of the electrical converter 10. It may be possible that more than one filter cell 30 is connected in series and/or in parallel between the output 24 and the output 34 of a phase.

Every filter cell 30 comprises two half-bridges 36, which are connected in parallel with a cell capacitor 38. A first midpoint of one of the half-bridges 36 is connected to the output 24 of the main stage 12. A second midpoint of the other half-bridge 36 provides an output 40 of the filter cell 30 and is connected via the optional passive filter 32 with the respective output 34 of the electrical converter 10.

The filter cells 30 comprise different switching states, which may be reached by accordingly switching their semiconductor switches (two per half-bridge in this example), which, for example, may be IGBTs. In a first switching state (also denoted as "a directly connecting state" herein), the filter cell 30 directly connects the output 24 of the main stage 12 with the output 40 of the filter cell 30. This may be achieved by switching on either only both upper semiconductor switches or only both lower semiconductor switches connected between the input 24 and the output 40 of the filter cell 30. In a second switching state, the filter cell 30 connects the cell capacitor 38 between the outputs 24, 40 such that the cell capacitor voltage of the cell capacitor 38 is added to the intermediate voltage provided at the output 24. In a third switching state, the filter cell 30 connects the cell capacitor 38 between the outputs 24, 40 such that the cell capacitor voltage of the cell capacitor 38 is subtracted from the intermediate voltage provided at the output 24. In such a way, the intermediate voltage from the main stage 12, which usually is shaped like a step-function due to the finite number of levels of the main stage 12, may be converted into a voltage (i.e. the output voltage) which better approximates a sinusoidal and/or continuous output voltage reference. In a fourth switching state (also denoted as "a rectifying state" herein), a rectified current flows through the cell capacitor 38, which is achieved by switching off all the four semiconductor switches of the filter cell 30 in this example.

Each of the passive filters 32 may comprise inductors, resistors and/or capacitors for electrical filtering the output voltage for even more damping the higher order harmonics. In this example, each passive filter 32 is configured as an EMC-filter (electromagnetic compatibility filter) comprising an inductance and an RC-group (i.e. a resistance and a capacitance connected in series) connected in series between the output 40 of the respective (active) filter cell 30 and a starpoint 42 to which all passive filters 32 are connected. In Fig. 1, the starpoint 42 is as floating starpoint. However, it may alternatively be connected to the neutral point NP of the DC link 20 of the main stage 12.

The electrical converter 10 further comprises a pre-charge circuit 44 adapted for pre-charging the filter cells 30 and the DC link 20 of the main stage 12. To this end, the pre-charge circuit 44 comprises an auxiliary power source 46. The pre-charge circuit 44 is connected between one phase of an output 34 of the electrical converter 10 and a neutral point NP of the DC link 20 of the main stage 12.

In this example, the auxiliary power source 46 of the pre-charge circuit 44 may be configured as a transformer winding creating a single-phase AC voltage. The pre-charging current may be limited under all circumstances to a few amperes due to a high short-circuit impedance of the auxiliary transformer.

All phases of the output 34 of the electrical converter 10 are connected via the electrical load 16 being an electrical motor, as in this example, or any other electrical machine or physical system. Therefore, although the pre-charge circuit 46 is connected to only one phase (e.g. phase a) of the output 34 of the electrical converter 10, the filter cells 30 in all the other phases (i.e. phases b and c in this example) may be charged up by the pre-charge circuit 46 as well via the electrical load 16, e.g. via the machine windings.

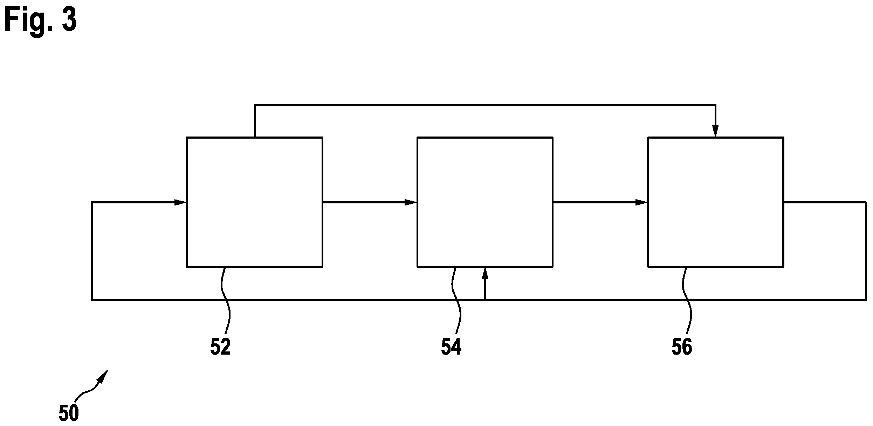

Fig. 3 shows a block diagram for a controller 50 adapted for performing the method as described herein. With the controller 50, the electrical converter 10 of Fig. 1 may be controlled. In this example, the controller 50 is composed of a filter cell pre-charge controller 54 for performing the steps of pre-charging the filter cells 30 according to the method described herein, a DC link pre-charge controller 52 for performing the steps of pre-charging the DC link 20 of the main stage 12 according to the method as described herein, and a main operation controller 56 for controlling the normal operation of the electrical converter 10. The blocks of the controller 50 also indicate method steps of a control method performed by the controller 50. Therefore, the block of the filter cell pre-charge controller 54 also may be seen as the steps of the pre-charging of the filter cells 30 according to the method. The block of the DC link pre-charge controller 52 also may be seen as the steps of pre-charging of the DC link 20 of the main stage 12 according to the method.

In the following, an exemplary embodiment of possible steps of pre-charging (active) filter cells and a DC link of a main stage of an electrical converter during its start-up according to the method of the invention will be described. By way of example only, the method will be described with reference to Fig. 1 through Fig. 4c. The start-up may be followed by the normal operation of the electrical converter 10 performed by block 56 of the controller 50, which also may be interrupted later for repeating the pre-charging of the filter cells 30 and/or of the DC link 20 by blocks 52 or, respectively, 54 if the cell voltage of the filter cells 30 falls below a predetermined cell voltage threshold or, respectively, the DC link voltage of the DC link 20 falls below a predetermined DC link voltage threshold.

In this example, as mentioned above, the auxiliary power source 46 of the pre-charge circuit 44 in Fig. 1 is configured as a transformer winding creating a single-phase AC voltage that is connected between phase a of the output 34 of the electrical converter 10 and the neutral point NP of the main DC link 20 of the main stage 12. Due to the high short-circuit impedance of the auxiliary transformer, the charging current of the pre-charge circuit 44 is limited under all circumstances to a few amperes.

In this example, during a start-up of the electrical converter 10, the controller 50 of Fig. 3 first pre-charges the upper and lower DC capacitors 19 and 21 of the DC link 20 of the main stage 12 to a pre-determined nominal DC link voltage, which is performed by DC link pre-charge controller 52 of Fig. 3. Then, the cell capacitors 38 of the filter cells 30 are charged to a pre-determined nominal cell voltage by the filter cell pre-charge controller 54 of Fig. 3. The inverse sequence, i.e. charging first the filter cells 30 and then the DC link 20 of the main stage 12, is also possible.

First, all filter cells 30 switch a zero vector (i.e. a directly connecting state), e.g. both upper or both lower semiconductor switches (such as IGBTs) in the H-bridge of the respective filter cell 30 of Fig. 1 are turned on. All semiconductor switches T1-T4 or, respectively T1-T6 (e.g. IGBTs) in the main stage 12 as shown in Fig. 2a/2b are turned off. Consequently, the filter cells 30 will be bypassed and the auxiliary winding AC voltage of the pre-charge circuit 44 starts charging the DC link 20 of the main stage 12 over the freewheeling diodes D1-D6 (see Fig. 2a/2b) of the main stage 12 of the electrical converter 10.

When the DC link 20 of the main stage 12 has reached its nominal voltage, the pre-charging of the filter cells 30 is carried out by the filter cell pre-charge controller 54, by setting the switching state of the main stage to (000), in which state the outputs 24 of the main stage 12 in all phases are connected to the neutral point NP of the DC link 20. All semiconductor switches of the filter cells 30 are turned off, so that the filter cells 30 are in their rectifying states. Now, the auxiliary winding AC voltage source 46 will charge the filter cells 30 because they are all connected in parallel to the single phase AC voltage source 46 over the electrical load 16 and the neutral point NP of the DC link 20. If the pre-determined nominal filter cell voltage is achieved, the pre-charge circuit 44 can be switched off or disconnected.

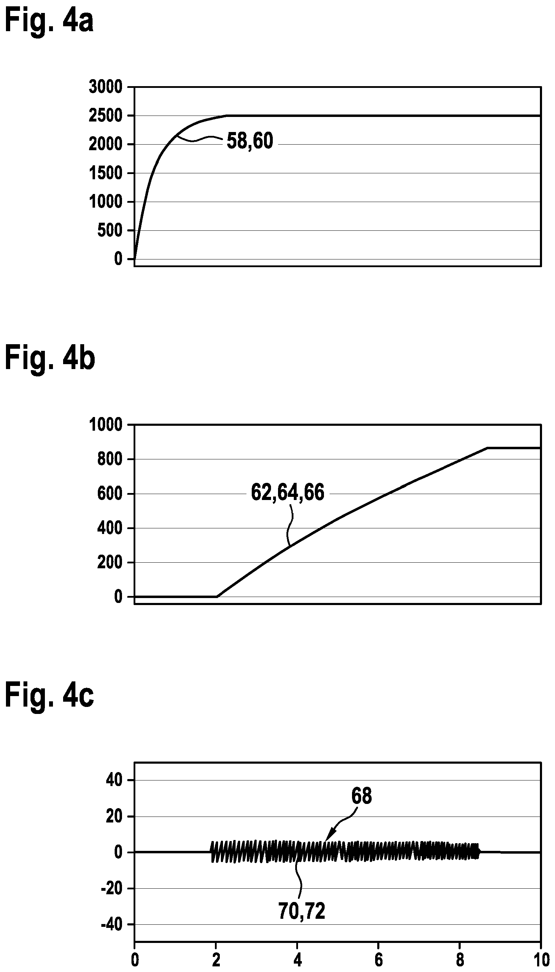

This is additionally illustrated in Figs. 4a-4c:
Fig. 4a shows two diagrams illustrating the pre-charging of the upper DC link capacitor 19 (curve 58) and lower DC link capacitor 21 (curve 60) of the DC link 20 to the nominal DC link voltage as described in the above example. Both diagrams show ideally identical curves 58 and 60. Fig. 4b shows three diagrams illustrating the pre-charging of the filter cell 30 in each of three phases (phase a: curve 62; phase b: curve 64; phase c: curve 66) of the electrical converter 10 to the nominal cell voltage, which is performed directly after having pre-charged the DC link 20 in the above example. All three diagrams show ideally identical curves 62, 64 and 66. Fig. 4c shows diagrams illustrating a motor current in each of three phases during the pre-charging of the filter cells 30 or during the pre-charging of the DC link 20 as described above. Here, the amplitude of the motor current in phase a (curve 68) is twice as large as the amplitudes of the motor currents in phases b and c (curves 70 and 72), into which the motor current in phase a splits up, as can be seen from Fig. 1.

Although pre-charge circuit 44 is connected only to phase a, all the other active filter cells 30 (i.e. in phases b and c) will charge up as well via the machine windings of the electrical load 16. The machine windings connect the three AF cells 30 in parallel with respect to the auxiliary power source 46. The resulting current vector in the machine (electrical load 16) is not rotating, it only oscillates on the alpha-axis of a two-dimensional vector representation of the complex current. Therefore, the rotor of the machine cannot start to turn.

As mentioned above, the starpoint 42 of the passive EMC-filters 32 is floating in the example shown in Fig. 1. The method also works with the EMC-filter starpoint 32 connected to the neutral point NP of the DC link 20 of the main stage 12.

If either the DC link 20 or the cell capacitors 38 of the active filter cells 30 discharge below a pre-defined threshold, the pre-charge circuit 44 can be connected again and the switching sequence described previously can be repeated.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for pre-charging filter cells (30) during a start-up of an electrical converter (10),
the electrical converter (10) comprising a main stage (12) adapted for converting a DC voltage into a multi-phase intermediate voltage comprising at least three voltage levels,
a filter cell stage (14) with a filter cell (30) for each phase of the intermediate voltage, each filter cell (30) being adapted for adding or subtracting a cell voltage of the filter cell (30) to the intermediate voltage, and a pre-charge circuit (44) adapted for pre-charging the filter cells (30) and a DC link (20) of the main stage (12) and comprising an auxiliary power source (46) connected between one phase of an output (34) of the electrical converter (10) and a neutral point (NP) of said DC link (20) of the main stage (12), all phases of the output (34) of the electrical converter (10) being connected via an electrical load (16);
the method comprising a pre-charging of the filter cells (30) comprising the steps of:
switching the main stage (12) such that all phases of the output (24) of the main stage (12) are directly connected to the neutral point (NP) of the DC link (20) of the main stage (12);
switching at least one of the filter cells (30) into a rectifying state, in which a rectified current flows through a cell capacitor (38) of this filter cell (30); and
switching the pre-charge circuit (44) on and charging the cell capacitor (38) of said at least one filter cell (30) by the pre-charge circuit (44), until a nominal cell voltage is achieved at the cell capacitor (38) of this filter cell (30).

2. The method of claim 1,
wherein said pre-charging of the filter cells (30) is done by simultaneously switching all filter cells (30) into said rectifying states, so that cell capacitors (38) of all filter cells (30) are simultaneously charged by the pre-charge circuit (44).

3. The method of claim 1 or 2,
wherein current generated by the pre-charge circuit (44) is alternating current.

4. The method of one of the previous claims,
further comprising a pre-charging of the DC link (20) of the main stage (12) which is carried out before or after said pre-charging of the filter cells (30) and comprises the steps of:
switching each filter cell (30) such that its output (40) is directly connected to its input (24), thus bypassing the cell capacitor (38);
switching the main stage (12) such that, depending on the sign of voltage applied between said neutral point (NP) of the DC link (20) and an output (24) of the main stage (12), either an upper DC link capacitor (19) or a lower DC link capacitor (21) is charged;
switching the pre-charge circuit (44) on and charging said DC link capacitors (19, 21) by an alternating current generated by the pre-charge circuit (44), until a nominal DC link voltage of the DC link (20) is achieved.

5. The method of one of the previous claims,
wherein the pre-charge circuit (44) is switched off when the nominal cell voltages of the filter cells (30) and/or the nominal DC link voltage of the DC link (20) is/are achieved.

6. The method of one of the previous claims,
wherein said pre-charging of the filter cells (30) is repeated whenever the cell voltage of at least one of the filter cells (30) falls below a predetermined cell voltage threshold; and/or
said pre-charging of the DC link (20) of the main stage (12) is repeated whenever the DC link voltage of the DC link (20) falls below a predetermined DC link voltage threshold.

7. The method of one of the previous claims,
wherein the electrical converter (10) further comprises, in each phase of its output (34), a passive output filter (32) connected in series between the respective output (40) of the filter cell stage (14) and an output (34) of the electrical converter (10);
and the pre-charge circuit (44) is preferably connected to said phase of the output (34) of the electrical converter (10) between an inductance (L) and an RC-group of the passive output filter (32) provided in this phase.

8. The method of one of the previous claims,
wherein the auxiliary power source (46) of the pre-charge circuit (44) is configured as a transformer winding creating a single-phase AC voltage.

9. The method of one of the previous claims,
wherein each filter cell (30) comprises two half-bridges (36) connected in parallel with the cell capacitor (38); and
each half-bridge (36) has at least two semiconductor switches, each of which is bypassed by a freewheeling diode;
such that the respective filter cell (30) is switched into a rectifying state, in which a rectified current flows through the cell capacitor (38), by switching off all its semiconductor switches; and
the respective filter cell (30) is switched into a directly connecting state, in which its cell capacitor (38) is bypassed, by switching on either only all upper semiconductor switches or only all lower semiconductor switches connected between the input (24) and the output (40) of the filter cell (30).

10. The method of one of the previous claims,
wherein each phase of the main stage (12) comprises at least four freewheeling diodes (D1-D6) and at least four semiconductor switches (T1-T4; T1-T6), each of which is bypassed by one of said freewheeling diodes (D1-D4; D1-D6);
such that by switching off all semiconductor switches (T1-T4; T1-T6) of the main stage (12), either the upper DC link capacitor (19) or the lower DC link capacitor (21) is charged over the freewheeling diodes (D1-D4) bypassing the semiconductor switches (T1-T4), depending on the current sign; and
by switching on at least two semiconductor switches (T2-T3; T2-T3/T5-T6) of the main stage (12), its output (24) is directly connected to the neutral point (NP) of the DC link (20), thereby bypassing the DC link capacitors (19, 21).

11. A controller (50) adapted to control an electrical converter (10), the electrical converter (10) comprising a main stage (12) adapted for converting a DC voltage into a multi-phase intermediate voltage comprising at least three voltage levels, a filter cell stage (14) with a filter cell (30) for each phase of the intermediate voltage, each filter cell (30) being adapted for adding or subtracting a cell voltage of the filter cell (30) to the intermediate voltage, and a pre-charge circuit (44) adapted for pre-charging the filter cells (30) and a DC link (20) of the main stage (12) and comprising an auxiliary power source (46) connected between one phase of an output (34) of the electrical converter (10) and a neutral point (NP) of said DC link (20) of the main stage (12), all phases of the output (34) of the electrical converter (10) being connected via an electrical load (16);
wherein the controller (50) comprises a filter cell pre-charge controller (54) adapted to perform the steps of:
switching the main stage (12) such that all phases of the output (24) of the main stage (12) are directly connected to the neutral point (NP) of the DC link (20) of the main stage (12);
switching at least one of the filter cells (30) into a rectifying state, in which a rectified current flows through a cell capacitor (38) of this filter cell (30); and
switching the pre-charge circuit (44) on to charge the cell capacitor (38) of said at least one filter cell (30) by the pre-charge circuit (44), until a nominal cell voltage is achieved at the cell capacitor (38) of this filter cell (30).

12. A computer program for pre-charging filter cells (30) during a start-up of an electrical converter (10), the electrical converter (10) comprising a main stage (12) adapted for converting a DC voltage into a multi-phase intermediate voltage comprising at least three voltage levels, a filter cell stage (14) with a filter cell (30) for each phase of the intermediate voltage, each filter cell (30) being adapted for adding or subtracting a cell voltage of the filter cell (30) to the intermediate voltage, and a pre-charge circuit (44) adapted for pre-charging the filter cells (30) and a DC link (20) of the main stage (12) and comprising an auxiliary power source (46) connected between one phase of an output (34) of the electrical converter (10) and a neutral point (NP) of said DC link (20) of the main stage (12), all phases of the output (34) of the electrical converter (10) being connected via an electrical load (16);
wherein the computer program, when executed by a processor of a controller for the electrical converter, is adapted to carry out the steps of the method of one of claims 1, 2, 4, 5 or 6.

13. A computer-readable medium, in which a computer program according to claim 12 is stored.

14. An electrical converter (10), comprising:
a main stage (12) adapted for converting a DC voltage into a multi-phase intermediate voltage comprising at least three voltage levels;
a filter cell stage (14) with a filter cell (30) for each phase of the intermediate voltage, wherein each filter cell (30) is adapted for adding or subtracting a cell voltage of the filter cell (30) to the intermediate voltage;
a pre-charge circuit (44) adapted for pre-charging the filter cells (30) and a DC link (20) of the main stage (12) and comprising an auxiliary power source (46) connected between one phase of an output (34) of the electrical converter (10) and a neutral point (NP) of said DC link (20) of the main stage (12),
a controller (50) according to claim 11,
an electrical load (16), wherein all phases of the output (34) of the electrical converter (10) are connected via the electrical load (16).

## Patentansprüche

1. Verfahren zum Vorladen von Filterzellen (30) während eines Starts eines elektrischen Umrichters (10),
wobei der elektrische Umrichter (10) eine Hauptstufe (12), die zum Umwandeln einer Gleichspannung in eine mehrphasige Zwischenspannung ausgelegt ist, die mindestens drei Spannungspegel umfasst, eine Filterzellenstufe (14) mit einer Filterzelle (30) für jede Phase der Zwischenspannung umfasst, wobei jede Filterzelle (30) zum Addieren oder Subtrahieren einer Zellenspannung der Filterzelle (30) zu der Zwischenspannung ausgelegt ist, und eine Vorladeschaltung (44), die zum Vorladen der Filterzellen (30) und eines DC-Zwischenkreises (20) der Hauptstufe (12) ausgelegt ist und eine Hilfsleistungsquelle (46) umfasst, die zwischen einer Phase eines Ausgangs (34) des elektrischen Umrichters (10) und einem Neutralpunkt (NP) des DC-Zwischenkreises (20) der Hauptstufe (12) geschaltet ist, wobei alle Phasen des Ausgangs (34) des elektrischen Umrichters (10) über eine elektrische Last (16) verbunden sind;
wobei das Verfahren ein Vorladen der Filterzellen (30) umfasst, das die folgenden Schritte umfasst:
Umschalten der Hauptstufe (12) so, dass alle Phasen des Ausgangs (24) der Hauptstufe (12) direkt mit dem Neutralpunkt (NP) des DC-Zwischenkreises (20) der Hauptstufe (12) verbunden sind;
Umschalten mindestens einer der Filterzellen (30) in einen Gleichrichterzustand, in dem ein gleichgerichteter Strom durch einen Zellenkondensator (38) dieser Filterzelle (30) fließt; und
Einschalten der Vorladeschaltung (44) und Laden des Zellenkondensators (38) der mindestens einen Filterzelle (30) durch die Vorladeschaltung (44), bis eine nominale Zellenspannung am Zellenkondensator (38) dieser Filterzelle (30) erreicht ist.

2. Verfahren nach Anspruch 1,
wobei das Vorladen der Filterzellen (30) durch gleichzeitiges Schalten aller Filterzellen (30) in die Gleichrichterzustände erfolgt, so dass Zellenkondensatoren (38) aller Filterzellen (30) durch die Vorladeschaltung (44) gleichzeitig geladen werden.

3. Verfahren nach Anspruch 1 oder 2,
wobei der durch die Vorladeschaltung (44) erzeugte Strom Wechselstrom ist.

4. Verfahren nach einem der vorherigen Ansprüche,
das ferner ein Vorladen des DC-Zwischenkreises (20) der Hauptstufe (12) umfasst, das vor oder nach dem Vorladen der Filterzellen (30) durchgeführt wird, und die folgenden Schritte umfasst:
Schalten jeder Filterzelle (30) so, dass ihr Ausgang (40) direkt mit ihrem Eingang (24) verbunden ist, wodurch der Zellenkondensator (38) umgangen wird;
Schalten der Hauptstufe (12), so dass abhängig von dem Vorzeichen einer Spannung, die zwischen dem neutralen Punkt (NP) des DC-Zwischenkreises (20) und einem Ausgang (24) der Hauptstufe (12) angelegt wird, entweder ein oberer DC-Zwischenkreiskondensator (19) oder ein unterer DC-Zwischenkreiskondensator (21) geladen wird;
Einschalten der Vorladeschaltung (44) und Laden der DC-Zwischenkreiskondensatoren (19, 21) durch einen Wechselstrom, der durch die Vorladeschaltung (44) erzeugt wird, bis eine nominale DC-Zwischenkreisspannung des DC-Zwischenkreises (20) erreicht ist.

5. Verfahren nach einem der vorherigen Ansprüche,
wobei die Vorladeschaltung (44) ausgeschaltet wird, wenn die nominalen Zellenspannungen der Filterzellen (30) und/oder die nominale DC-Zwischenkreisspannung des DC-Zwischenkreises (20) erreicht wird/werden.

6. Verfahren nach einem der vorherigen Ansprüche,
wobei das Vorladen der Filterzellen (30) immer dann wiederholt wird, wenn die Zellenspannung von mindestens einer der Filterzellen (30) unter eine vorbestimmte Zellenspannungsschwelle fällt; und/oder
das Vorladen des DC-Zwischenkreises (20) der Hauptstufe (12) immer dann wiederholt wird, wenn die DC-Zwischenkreisspannung des DC-Zwischenkreises (20) unter eine vorbestimmte DC-Zwischenkreisspannungsschwelle fällt.

7. Verfahren nach einem der vorherigen Ansprüche,
wobei der elektrische Umrichter (10) ferner in jeder Phase seines Ausgangs (34) ein passives Ausgangsfilter (32) umfasst, das zwischen dem jeweiligen Ausgang (40) der Filterzellenstufe (14) und einem Ausgang (34) des elektrischen Umrichters (10) in Reihe geschaltet ist;
und die Vorladeschaltung (44) vorzugsweise zwischen einer Induktivität (L) und einer in dieser Phase vorgesehenen RC-Gruppe des passiven Ausgangsfilters (32) mit dieser Phase des Ausgangs (34) des elektrischen Umrichters (10) verbunden ist.

8. Verfahren nach einem der vorherigen Ansprüche,
wobei die Hilfsleistungsquelle (46) der Vorladeschaltung (44) als eine Transformatorwicklung konfiguriert ist, die eine einphasige Wechselspannung erzeugt.

9. Verfahren nach einem der vorherigen Ansprüche,
wobei jede Filterzelle (30) zwei Halbbrücken (36) umfasst, die parallel mit dem Zellenkondensator (38) verbunden sind; und
jede Halbbrücke (36) mindestens zwei Halbleiterschalter aufweist, von denen jeder von einer Freilaufdiode umgangen wird;
so dass die jeweilige Filterzelle (30) durch Abschalten aller ihrer Halbleiterschalter in einen Gleichrichterzustand geschaltet wird, in dem ein gleichgerichteter Strom durch den Zellenkondensator (38) fließt; und
die jeweilige Filterzelle (30) durch Einschalten entweder nur aller oberen Halbleiterschalter oder nur aller zwischen dem Eingang (24) und dem Ausgang (40) der Filterzelle (30) geschalteten unteren Halbleiterschalter in einen direkten Verbindungszustand geschaltet wird, in dem ihr Zellenkondensator (38) umgangen wird.

10. Verfahren nach einem der vorherigen Ansprüche,
wobei jede Phase der Hauptstufe (12) mindestens vier Freilaufdioden (D1-D6) und mindestens vier Halbleiterschalter (T1-T4; T1-T6) umfasst, von denen jeder von einer der Freilaufdioden (D1-D4; D1-D6) umgangen wird;
so dass durch Ausschalten aller Halbleiterschalter (T1-T4; T1-T6) der Hauptstufe (12) entweder der obere DC-Zwischenkreiskondensator (19) oder der untere DC-Zwischenkreiskondensator (21) über die Freilaufdioden (D1-D4) unter Umgehung der Halbleiterschalter (T1-T4) in Abhängigkeit von dem Stromvorzeichen geladen wird; und
durch Einschalten von mindestens zwei Halbleiterschaltern (T2-T3; T2-T3/T5-T6) der Hauptstufe (12) ihr Ausgang (24) direkt mit dem Nullpunkt (NP) des DC-Zwischenkreises (20) verbunden ist, wodurch die DC-Zwischenkreiskondensatoren (19, 21) umgangen werden.

11. Steuerung (50), die dazu ausgelegt ist, einen elektrischen Umrichter (10) zu steuern, wobei der elektrische Umrichter (10) eine Hauptstufe (12) umfasst, die dazu ausgelegt ist, eine Gleichspannung in eine mehrphasige Zwischenspannung umzuwandeln, die mindestens drei Spannungspegel umfasst, eine Filterzellenstufe (14) mit einer Filterzelle (30) für jede Phase der Zwischenspannung, wobei jede Filterzelle (30) zum Addieren oder Subtrahieren einer Zellenspannung der Filterzelle (30) zu der Zwischenspannung ausgelegt ist, und eine Vorladeschaltung (44), die zum Vorladen der Filterzellen (30) und eines DC-Zwischenkreises (20) der Hauptstufe (12) ausgelegt ist und eine Hilfsleistungsquelle (46) umfasst, die zwischen einer Phase eines Ausgangs (34) des elektrischen Umrichters (10) und einem Neutralpunkt (NP) des DC-Zwischenkreises (20) der Hauptstufe (12) geschaltet ist, wobei alle Phasen des Ausgangs (34) des elektrischen Umrichters (10) über eine elektrische Last (16) verbunden sind;
wobei die Steuerung (50) eine Filterzellenvorladesteuerung (54) umfasst, die dazu ausgelegt ist, die folgenden Schritte durchzuführen:
Umschalten der Hauptstufe (12) so, dass alle Phasen des Ausgangs (24) der Hauptstufe (12) direkt mit dem Neutralpunkt (NP) des DC-Zwischenkreises (20) der Hauptstufe (12) verbunden sind;
Umschalten mindestens einer der Filterzellen (30) in einen Gleichrichterzustand, in dem ein gleichgerichteter Strom durch einen Zellenkondensator (38) dieser Filterzelle (30) fließt; und
Einschalten der Vorladeschaltung (44), um den Zellenkondensator (38) der mindestens einen Filterzelle (30) durch die Vorladeschaltung (44) zu laden, bis eine nominale Zellenspannung am Zellenkondensator (38) dieser Filterzelle (30) erreicht wird.

12. Computerprogramm zum Vorladen von Filterzellen (30) während eines Startvorgangs eines elektrischen Umrichters (10), wobei der elektrische Umrichter (10) eine Hauptstufe (12) umfasst, die zum Umwandeln einer Gleichspannung in eine mehrphasige Zwischenspannung ausgelegt ist, die mindestens drei Spannungspegel umfasst, eine Filterzellenstufe (14) mit einer Filterzelle (30) für jede Phase der Zwischenspannung, wobei jede Filterzelle (30) zum Addieren oder Subtrahieren einer Zellenspannung der Filterzelle (30) zu der Zwischenspannung ausgelegt ist, und eine Vorladeschaltung (44), die zum Vorladen der Filterzellen (30) und eines DC-Zwischenkreises (20) der Hauptstufe (12) ausgelegt ist und eine Hilfsleistungsquelle (46) umfasst, die zwischen einer Phase eines Ausgangs (34) des elektrischen Umrichters (10) und einem Neutralpunkt (NP) des DC-Zwischenkreises (20) der Hauptstufe (12) geschaltet ist, wobei alle Phasen des Ausgangs (34) des elektrischen Umrichters (10) über eine elektrische Last (16) verbunden sind;
wobei das Computerprogramm, wenn es durch einen Prozessor einer Steuerung für den elektrischen Umrichter ausgeführt wird, dazu ausgelegt ist, die Schritte des Verfahrens nach einem der Ansprüche 1, 2, 4, 5 oder 6 durchzuführen.

13. Computerlesbares Medium, in dem ein Computerprogramm nach Anspruch 12 gespeichert ist.

14. Elektrischer Umrichter (10), der Folgendes umfasst:
eine Hauptstufe (12), die zum Umwandeln einer Gleichspannung in eine mehrphasige Zwischenspannung ausgelegt ist, die mindestens drei Spannungspegel umfasst;
eine Filterzellenstufe (14) mit einer Filterzelle (30) für jede Phase der Zwischenspannung, wobei jede Filterzelle (30) zum Addieren oder Subtrahieren einer Zellenspannung der Filterzelle (30) zu der Zwischenspannung ausgelegt ist;
eine Vorladeschaltung (44), die zum Vorladen der Filterzellen (30) und eines DC-Zwischenkreises (20) der Hauptstufe (12) ausgelegt ist und eine Hilfsleistungsquelle (46) umfasst, die zwischen einer Phase eines Ausgangs (34) des elektrischen Umrichters (10) und einem Neutralpunkt (NP) des DC-Zwischenkreises (20) der Hauptstufe (12) geschaltet ist,
eine Steuerung (50) nach Anspruch 11,
eine elektrische Last (16), wobei alle Phasen des Ausgangs (34) des elektrischen Umrichters (10) über die elektrische Last (16) verbunden sind.

## Revendications

1. Procédé de précharge de cellules filtrantes (30) lors d'un démarrage d'un convertisseur électrique (10), le convertisseur électrique (10) comprenant un étage principal (12) conçu pour convertir une tension CC en une tension intermédiaire multiphasée comprenant au moins trois niveaux de tension, un étage de cellules filtrantes (14) avec une cellule filtrante (30) pour chaque phase de la tension intermédiaire, chaque cellule filtrante (30) étant conçue pour ajouter ou soustraire une tension cellulaire de la cellule filtrante (30) à la tension intermédiaire, et un circuit de précharge (44) conçu pour précharger les cellules filtrantes (30) et une liaison CC (20) de l'étage principal (12) et comprenant une source d'alimentation auxiliaire (46) connectée entre une phase d'une sortie (34) du convertisseur électrique (10) et un point neutre (NP) de ladite liaison CC (20) de l'étage principal (12), toutes les phases de la sortie (34) du convertisseur électrique (10) étant connectées via une charge électrique (16) ;
le procédé comprenant une précharge des cellules filtrantes (30) comprenant les étapes de :
commutation de l'étage principal (12) de sorte que toutes les phases de la sortie (24) de l'étage principal (12) soient directement connectées au point neutre (NP) de la liaison CC (20) de l'étage principal (12) ;
commutation d'au moins l'une des cellules filtrantes (30) dans un état redressant, dans lequel un courant redressé traverse un condensateur de cellule (38) de cette cellule filtrante (30) ; et
activation du circuit de précharge (44) et charge du condensateur de cellule (38) de ladite au moins une cellule filtrante (30) par le circuit de précharge (44), jusqu'à ce qu'une tension nominale de cellule soit atteinte au condensateur de cellule (38) de cette cellule filtrante (30).

2. Procédé selon la revendication 1,
dans lequel ladite précharge des cellules filtrantes (30) est effectuée en commutant simultanément toutes les cellules filtrantes (30) dans lesdits états de redressement, de sorte que les condensateurs de cellules (38) de toutes les cellules filtrantes (30) soient chargés simultanément par le circuit de précharge (44).

3. Procédé selon la revendication 1 ou 2,
dans lequel le courant généré par le circuit de précharge (44) est un courant alternatif.

4. Procédé selon l'une des revendications précédentes, comprenant en outre une précharge de la liaison CC (20) de l'étage principal (12) réalisée avant ou après ladite précharge des cellules filtrantes (30) et comprenant les étapes de :
commutation de chaque cellule filtrant (30) de manière à ce que sa sortie (40) soit directement connectée à son entrée (24), contournant ainsi le condensateur de cellule (38) ;
commutation de l'étage principal (12) de sorte que, en fonction du signe de la tension appliquée entre ledit point neutre (NP) de la liaison CC (20) et une sortie (24) de l'étage principal (12), on charge soit un condensateur de liaison CC supérieur (19), soit un condensateur de liaison CC inférieur (21) ;
activation du circuit de précharge (44) et charge desdits condensateurs de liaison CC (19, 21) par un courant alternatif généré par le circuit de précharge (44), jusqu'à ce qu'une tension nominale de liaison CC de la liaison CC (20) soit atteinte.

5. Procédé selon l'une des revendications précédentes, dans lequel le circuit de précharge (44) est désactivé lorsque les tensions de cellule nominales des cellules filtrantes (30) et/ou la tension de liaison CC nominale de la liaison CC (20) sont atteintes.

6. Procédé selon l'une des revendications précédentes, dans lequel ladite précharge des cellules filtrantes (30) est répétée chaque fois que la tension de cellule d'au moins l'une des cellules filtrantes (30) tombe en dessous d'un seuil de tension de cellule prédéterminé ; et/ou
ladite précharge de la liaison CC (20) de l'étage principal (12) est répétée chaque fois que la tension de liaison CC de la liaison CC (20) tombe en dessous d'un seuil de tension de liaison CC prédéterminé.

7. Procédé selon l'une des revendications précédentes, dans lequel le convertisseur électrique (10) comprend en outre, dans chaque phase de sa sortie (34), un filtre passif de sortie (32) connecté en série entre la sortie (40) respective de l'étage de cellules filtrantes (14) et une sortie (34) du convertisseur électrique (10) ;
et le circuit de précharge (44) est de préférence connecté à ladite phase de la sortie (34) du convertisseur électrique (10) entre une inductance (1) et un groupe RC du filtre passif de sortie (32) prévu dans cette phase.

8. Procédé selon l'une des revendications précédentes, dans lequel la source d'alimentation auxiliaire (46) du circuit de précharge (44) est configurée comme un enroulement de transformateur créant une tension CA monophasée.

9. Procédé selon l'une des revendications précédentes, dans lequel chaque cellule filtrante (30) comprend deux demi-ponts (36) connectés en parallèle au condensateur de cellule (38) ; et
chaque demi-pont (36) comporte au moins deux commutateurs à semi-conducteurs dont chacun est contourné par une diode de roue libre ;
de telle sorte que la cellule filtrante respective (30) soit commutée dans un état redresseur, dans lequel un courant redressé circule dans le condensateur de cellule (38), par désactivation de tous ses commutateurs à semi-conducteurs ; et
la cellule filtrante respective (30) est commutée dans un état de connexion directe, dans lequel son condensateur de cellule (38) est contourné, soit par activation soit de tous les commutateurs à semi-conducteurs supérieurs, soit de tous les commutateurs à semi-conducteurs inférieurs, connectés entre l'entrée (24) et la sortie (40) de la cellule filtrante (30).

10. Procédé selon l'une des revendications précédentes, dans lequel chaque phase de l'étage principal (12) comprend au moins quatre diodes de roue libre (D1-D6) et au moins quatre commutateurs à semi-conducteur (T1-T4 ; T1-T6) qui sont chacun contournés par une desdites diodes de roue libre (D1-D4 ; D1-D6) ;
de telle sorte que, par désactivation de tous les commutateurs à semi-conducteurs (T1-T4 ; T1-T6) de l'étage principal (12), soit le condensateur de liaison CC supérieur (19), soit le condensateur de liaison CC inférieur (21) soit chargé sur les diodes de roue libre (D1-D4) contournant les commutateurs à semi-conducteurs (T1-T4), en fonction du signe de courant ; et
en activant au moins deux commutateurs à semi-conducteurs (T2-T3 ; T2-T3/T5-T6) de l'étage principal (12), sa sortie (24) est directement connectée au point neutre (NP) de la liaison CC (20), en contournant ainsi les condensateurs de liaison CC (19, 21).

11. Contrôleur (50) conçu pour commander un convertisseur électrique (10), le convertisseur électrique (10) comprenant un étage principal (12) conçu pour convertir une tension CC en une tension intermédiaire multiphasée comprenant au moins trois niveaux de tension, un étage de cellules filtrantes (14) avec une cellule filtrante (30) pour chaque phase de la tension intermédiaire, chaque cellule filtrante (30) étant conçue pour ajouter ou soustraire une tension cellulaire de la cellule filtrante (30) à la tension intermédiaire, et un circuit de précharge (44) conçu pour précharger les cellules filtrantes (30) et une liaison CC (20) de l'étage principal (12) et comprenant une source d'alimentation auxiliaire (46) connectée entre une phase d'une sortie (34) du convertisseur électrique (10) et un point neutre (NP) de ladite liaison CC (20) de l'étage principal (12), toutes les phases de la sortie (34) du convertisseur électrique (10) étant connectées via une charge électrique (16) ;
le contrôleur (50) comprenant un contrôleur de précharge de cellule filtrante (54) conçu pour réaliser les étapes de :
commutation de l'étage principal (12) de sorte que toutes les phases de la sortie (24) de l'étage principal (12) soient directement connectées au point neutre (NP) de la liaison CC (20) de l'étage principal (12) ;
commutation d'au moins l'une des cellules filtrantes (30) dans un état redressant, dans lequel un courant redressé traverse un condensateur de cellule (38) de cette cellule filtrante (30) ; et
activation du circuit de précharge (44) pour charger le condensateur de cellule (38) de ladite au moins une cellule filtrante (30) par le circuit de précharge (44), jusqu'à ce qu'une tension nominale de cellule soit atteinte au condensateur de cellule (38) de cette cellule filtrante (30).

12. Programme d'ordinateur pour précharger des cellules filtrantes (30) lors d'un démarrage d'un convertisseur électrique (10), le convertisseur électrique (10) comprenant un étage principal (12) conçu pour convertir une tension CC en une tension intermédiaire multiphasée comprenant au moins trois niveaux de tension, un étage de cellules filtrantes (14) avec une cellule filtrante (30) pour chaque phase de la tension intermédiaire, chaque cellule filtrante (30) étant conçue pour ajouter ou soustraire une tension cellulaire de la cellule filtrante (30) à la tension intermédiaire, et un circuit de précharge (44) conçu pour précharger les cellules filtrantes (30) et une liaison CC (20) de l'étage principal (12) et comprenant une source d'alimentation auxiliaire (46) connectée entre une phase d'une sortie (34) du convertisseur électrique (10) et un point neutre (NP) de ladite liaison CC (20) de l'étage principal (12), toutes les phases de la sortie (34) du convertisseur électrique (10) étant connectées via une charge électrique (16) ;
le programme d'ordinateur, lorsqu'il est exécuté par un processeur d'un contrôleur pour le convertisseur électrique, étant conçu pour exécuter les étapes du procédé selon l'une des revendications 1, 2, 4, 5 ou 6.

13. Support lisible par ordinateur, sur lequel est stocké un programme informatique selon la revendication 12.

14. Convertisseur électrique (10), comprenant :
un étage principal (12) conçu pour convertir une tension CC en une tension intermédiaire multiphasée comprenant au moins trois niveaux de tension ;
un étage de cellules filtrantes (14) avec une cellule filtrante (30) pour chaque phase de la tension intermédiaire, chaque cellule filtrante (30) étant conçue pour ajouter ou soustraire une tension cellulaire de la cellule filtrante (30) à la tension intermédiaire ;
un circuit de précharge (44) conçu pour précharger les cellules filtrantes (30) et une liaison CC (20) de l'étage principal (12) et comprenant une source d'alimentation auxiliaire (46) connectée entre une phase d'une sortie (34) du convertisseur électrique (10) et un point neutre (NP) de ladite liaison CC (20) de l'étage principal (12),
un contrôleur (50) selon la revendication 11,
une charge électrique (16), dans laquelle toutes les phases de la sortie (34) du convertisseur électrique (10) sont connectées via la charge électrique (16).
